# EUROPEAN PATENT APPLICATION

(11) **EP 1 936 497 A2**
(43) Date of publication of application: **25.06.2008**
(21) Application number: 07254096.6
(22) Date of filing: 16.10.2007
(51) Int. Cl.: G06F 9/445

(54) **Automated wide area software distribution with reduced network bandwidth requirements**

(30) Priority: 20.12.2006 US 613459
(71) Applicant: NCR Corporation, Dayton, Ohio 45479 (US)
(72) Inventor: Coleman, Jason S, Longwood FL 32779 (US); Hathiramani, Amit L., Winter Garden FL 34787 (US); Nikdel, David A., Aliso Viejo,CA 92656 (US)
(74) Representative: Williamson, Brian

(57) **Abstract**

A workstation and approach for automatically pulling software to update a client processor. The client processor is integrated with at least one other client processor coupled together over a local area network. The client processors are also integrated with a software distribution processor coupled together over a wide area network. The software distribution processor holds a software distribution as a set of file chunks, each file chunk of a configurable size and each file chunk with a calculated digital signature. By request of the client processor, the client processor communicates with the software distribution processor to obtain a list of client processors coupled together over the local area network and a desired state of software for the client processor. The client processor determines that at least one file chunk of the software distribution is required based on a comparison of the desired state with a current state of software running on the client processor. By a request of the client processor, the at least one file chunk is transferred from another client processor to the client processor over the local area network.

## Description

The present invention relates generally to software distribution systems and, in particular, to software distribution systems used to support remote sites, such as, airline self check-in, hotel check-in, rental car reservations, point of sale terminals, and the like.

With a growing number of self-service kiosk and agent terminal client workstations located beyond a centralized service center, application management and distribution of programs and software updates of software applications located on these client workstations becomes a growing problem. It is desirable and often mandatory that all clients are running the same software version to consistently comply with changing business requirements. If support of multiple concurrent versions of client software is required, then version control on both the clients and the server further increases the difficulty of application management and distribution. Further, it is desirable to update software on a remote client in an automated and unattended manner requiring minimal configuration and no human intervention.

The infrastructure supporting the remote clients and centralized server usually also has limitations that must be dealt with. For example, wide area network (WAN) bandwidth between the centralized server and each remote site is usually limited to save cost. Bandwidth allocation is typically based on application usage requirements and may not reflect software distribution requirements, especially if distribution is relatively infrequent. Updates to large applications with many files may cause a considerable amount of redundant material to be sent across a WAN to the remote clients. For example, an incremental application release may update a small number of files out of a 100 megabyte file list containing 1000 files but in many currently available solutions, the whole file list is sent to each remote client to ensure update compliance. To reduce bandwidth requirements for download and install time it is desirable to only update files which are new or have changed since the last update.

Some remote deployment sites, such as a kiosk deployment in a large airport or a point-of-sale terminal deployment in a large store, may contain tens or hundreds of clients, amplifying the above noted problems by orders of magnitude. Even though these sites may have high-speed local area networking between local clients, the local area network is not typically utilized to enhance the automation of a software distribution process.

The combination of such issues creates a very complex problem. For example, the wide-area network bandwidth restrictions noted above between a server and remote sites with many clients may create a situation which may not be practical or cost effective to manage.

Among its several aspects, the present invention recognizes that it is advantageous to have a centralized server environment coupled over a wide area network to a set of client workstations, which are further coupled together. The client workstations automatically pull software updates from the centralized server environment. It is further advantageous to use differential file downloading based on file chunk signatures across a wide area network and to use peer-to-peer client communications to transfer files between clients across a local area network.

To such ends, an embodiment of the invention is an automated method for pulling software to update a client processor. The client processor is integrated with at least one other client processor coupled together over a local area network. The client processors are integrated with a software distribution processor coupled together over a wide area network, wherein the software distribution processor holds a software distribution as a set of file chunks, each file chunk of a configurable size and each file chunk with a calculated digital signature. By request of the client processor, the client processor communicates with the software distribution processor to obtain a list of client processors coupled together over the local area network and a desired state of software for the client processor. The client processor determines that at least one file chunk of the software distribution is required based on a comparison of the desired state with a current state of software running on the client processor. By a request of the client processor, the at least one file chunk is transferred from another client processor to the client processor over the local area network.

Another embodiment of the invention addresses by a client workstation for pulling software updates. A local area network is coupled to the client workstation and at least one other client workstation for use in integrating the client workstation with the at least one other client workstation. A wide area network is coupled to the client workstations and a software distribution server for use in synchronizing the client workstations with the software distribution server, the software distribution sever holds a software distribution as a set of file chunks, each file chunk of a configurable size and each file chunk with a calculated digital signature. A client application operating on the client workstation communicates with the software distribution processor by request of the client workstation to obtain a list of client workstations coupled together over the local area network and a desired state of software for the client workstation, to determine in the client workstation that at least one file chunk of the software distribution is required based on a comparison of the desired state with a current state of software running on the client workstation, and to transfer, by request of the client workstation, the at least one file chunk from another client workstation to the client workstation over the local area network.

Another embodiment of the invention addresses computer-readable storage medium including program code stored thereon. The program code is used for integrating a client processor with at least one other client processor coupled together over a local area network. The program code causes the client processors to integrate with a software distribution processor coupled together over a wide area network, wherein the software distribution processor holds a software distribution as a set of file chunks, each file chunk of a configurable size and each file chunk with a calculated digital signature. As governed by the program code, communication with the software distribution processor by request of the client processor is accomplished to obtain a list of client processors coupled together over the local area network and a desired state of software for the client processor. The program code also supports determining in the client processor that at least one file chunk of the software distribution is required based on a comparison of the desired state with a current state of software running on the client processor. The program code further causes the at least one file chunk to be transferred by request of the client processor from another client processor to the client processor over the local area network.

Embodiments of the present invention will now be described, by way of example, with reference to the accompanying drawings in which:
Fig. 1 illustrates a centralized server system in accordance with one aspect of the present invention;
Fig. 2 illustrates an exemplary thin client version control (TCVC) system for advantageously distributing software to remote clients in accordance with one aspect of the present invention;
Fig. 3 illustrates a TCVC server startup process in accordance with an aspect of the present invention;
Fig. 4 illustrates a first response server process for responding to a first client request in accordance with an aspect of the present invention;
Fig. 5 illustrates a second response server process for responding to a second client request in accordance with an aspect of the present invention;
Fig. 6 illustrates a third response server process for responding to a third server request in accordance with an aspect of the present invention;
Fig. 7 illustrates a TCVC client startup process in accordance with an aspect of the present invention;
Fig. 8A illustrates part A of a TCVC client update process in accordance with an aspect of the present invention;
Fig. 8B illustrates part B of a TCVC client update process in accordance with an aspect of the present invention;
Fig. 8C illustrates part C of a TCVC client update process in accordance with an aspect of the present invention;
Fig. 8D illustrates part D of a TCVC client update process in accordance with an aspect of the present invention;
Fig. 9 illustrates a first response client process for responding to a first request from another client in accordance with an aspect of the present invention;
Fig. 10 illustrates a second response client process for responding to a second request from another client in accordance with an aspect of the present invention;
Fig. 11 illustrates a third response client process for responding to a third request from another client in accordance with an aspect of the present invention; and
Fig. 12 illustrates an exemplary automated software distribution system in accordance with an aspect of the present invention.

The present invention will now be described more fully with reference to the accompanying drawings, in which several embodiments and various aspects of the invention are shown. This invention may, however, be embodied in various forms and should not be construed as being limited to the embodiments set forth herein. Rather, these embodiments are provided so that this disclosure will be thorough and complete, and will fully convey the scope of the invention to those skilled in the art.

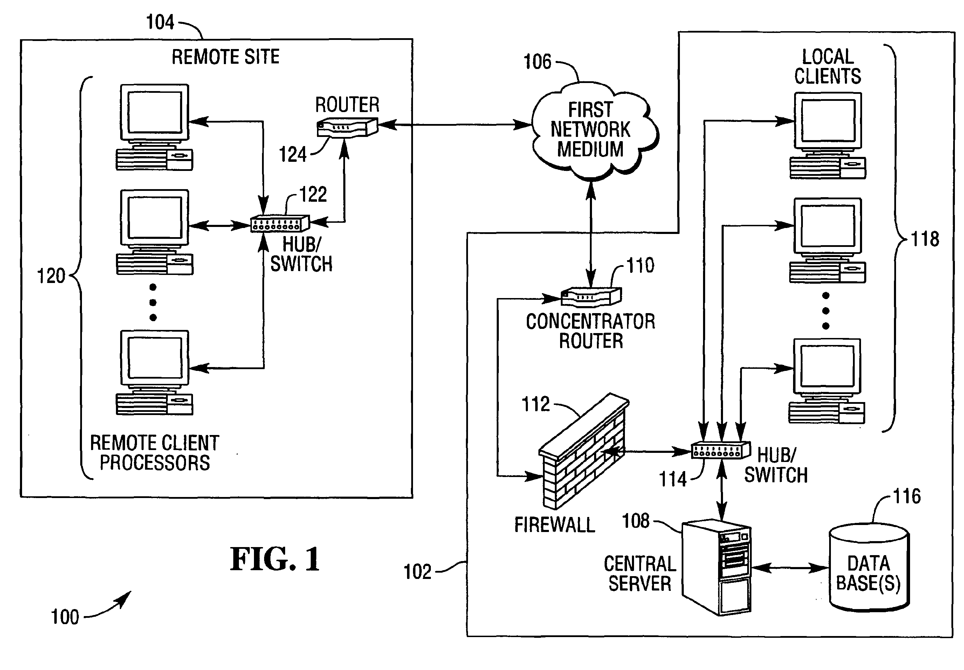

Fig. 1 illustrates a centralized server system 100 in accordance with an aspect of the present invention. The centralized server system 100 is illustrated with a central server environment 102, a remote site 104, and a first network medium 106. The central server environment 102 includes central server 108, concentrator/router 110, firewall 112, hub/switch 114, and other electronic equipment, including, for example, database(s) 116, which may include a database server, and other network switches, and local clients 118 of the central server 108.

A server, for example, central server 108, is a processing system having one or more processors, memory, input/output units of high capacity and performance, such as, large capacity disk drives and high speed communication devices, and may have a keyboard, a display, and a printer. Server programs, such as stored on computer readable media, may be loaded from a storage medium, such as a magnetic, optical, or other type of disk drive or non-volatile storage device, or downloaded through a communication device, for example. A server, such as central server 108, may be further configured as a cluster of servers to satisfy performance, capacity, and reliability requirements. Concentrators, routers, firewalls, hubs, and switches are networking devices that control the flow of data between different networks or processing nodes and may provide support for a virtual private network (VPN), for example. Firewalls are hardware devices and/or software applications which enforce a security policy on network traffic to protect a network and its internal devices, such as servers and databases, from unwanted or forbidden communications. A database may consist of a collection of high capacity disk drives each connected and managed by a database server providing and supporting database access functions.

The centralized server system 100 comprises a plurality of customer environments, such as the remote site 104. Remote sites may include, for example, airline environments, hotels, rental car companies, banks, and other such companies making use of a central server environment and remote sites. A remote site may suitably represent a hotel, a shopping mall, a bank, a college or university, a store, such as a coffee shop, or the like where one or more client workstations may be placed.

The remote site 104, such as an airline environment, may include, for example, one or more remote client processors 120, a hub/switch 122, and a router 124. The remote site 104 may also include a second network medium, such as, a local area network for coupling the remote client processors. A client processor is integrated with other client processors coupled together over the local area network, such as may occur when a new client processor is added to the local area network and when the local area network is initially brought on-line.

A workstation or kiosk, such as one of the remote client processors 120, in accordance with the present invention, is a self-service device for electronically interacting with a user of the centralized server system 100. A workstation or kiosk may suitably comprise a processing system with one or more processors, memory, input/output units, storage systems, such as magnetic and optical disk drives, and high speed communication devices, and typically has a keyboard, a display, and a printer. A kiosk can be tailored to provide functions, such as, passenger reservations, airline check in, hotel reservation and check in, rental car reservation and pickup or the like and can be located in any environment that is conducive for its intended functions, such as, checking in passengers for airline flights. Workstation programs or kiosk programs, as computer readable media, may be loaded from a storage medium, such as a disk drive or other such non-volatile storage device, or downloaded through a communication device, for example.

The first network medium 106 may comprise a wide area network, such as, a frame relay network, a virtual private network (VPN), Internet, or the like. The first network medium 106 provides a control and data communication path between the central server environment 102 and one or more remote sites, such as the remote site 104.

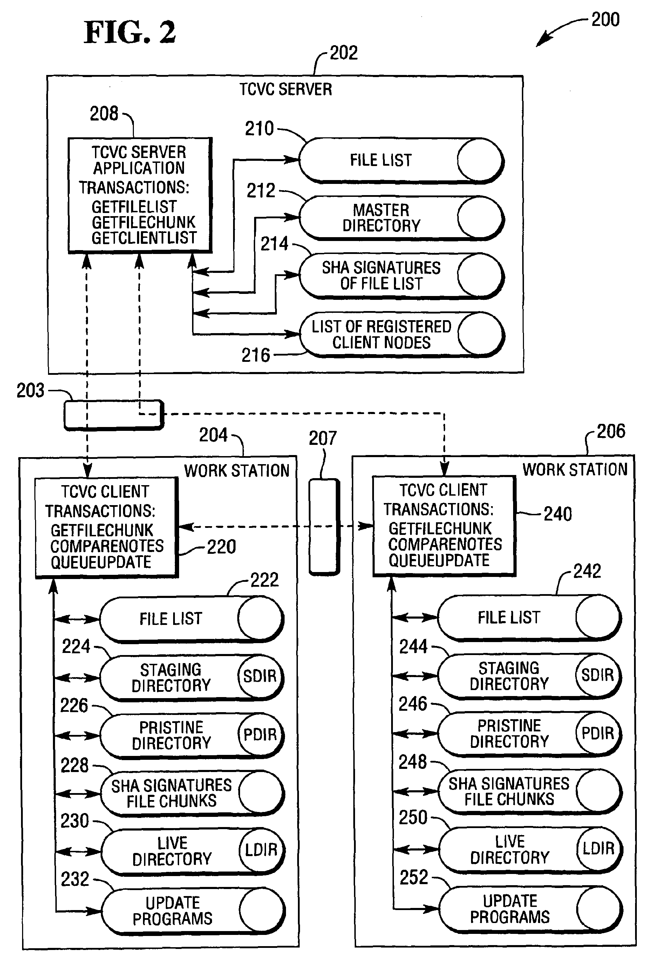

Fig. 2 illustrates an exemplary thin client version control (TCVC) system 200 for advantageously distributing software to remote clients in accordance with one aspect of the present invention. The exemplary TCVC system 200 includes a TCVC server 202, a first network medium 203, a workstation 204, a workstation 206, and a second network medium 207. The TCVC server 202 comprises a TCVC server application 208, file list 210, master directory 212, secure hash algorithm (SHA) signatures of file list 214, and list of registered client nodes 216. The workstation 204 comprises a thin client version control (TCVC) client application 220, a file list 222, a staging directory (SDIR) 224, a pristine directory (PDIR) 226, SHA signatures of file chunks 228, a live directory (LDIR) 230, and update programs 232. The workstation 206 comprises a TCVC client application 240, a file list 242, a staging directory (SDIR) 244, a pristine directory (PDIR) 246, SHA signatures of file chunks 248, a live directory (LDIR) 250, and update programs 252. The first network medium 203 may suitably comprise a wide area network, such as, a frame relay network, a virtual private network (VPN), Internet, or the like. The second network medium 207 may comprise a local area network for coupling the workstation 204 with the workstation 206 and any additional workstations which may or may not be directly coupled with the TCVC server 202.

The TCVC server application 208 runs on one or more servers, such as central server 108. The central server 108 has access to a master list of files that are used on each remote client processor 120, kiosk, or workstation. The TCVC server application 208 supports transactions, such as, getfilelist, getfilechunk, and getclientlist.

In an update procedure to determine if it has the latest files, a workstation, such as workstation 204 running the TCVC client application 220, sends a getfilelist transaction request to the TCVC server application 208. The TCVC client application 220 sends as input the name of the file list it is requesting, the IP address of the remote workstation where the TCVC client application 220 is running, and the secure hash algorithm (SHA) signature for the entire file list currently residing in the pristine directory (PDIR) 224 on the remote workstation. If the SHA signature sent by the client matches the SHA signature of the corresponding master file list on the server, the TCVC server application 208 sends an all clear signal to the client. If the signatures do not match, the TCVC server application 208 communicates to the client the master file list signature, the list of each file chunk in the master file list along with its associated SHA signature, the list of any files/directories that need to be deleted by the client during a cleanup process, and the list of IP addresses of its peers from where it can attempt to transfer file chunks.

As part of its update procedure, the TCVC client application 220, sends a getfilechunk transaction request to the TCVC server application 208 when it wants to download a file chunk from the server. The TCVC client application 220 sends as input the name of the file list it is requesting and the SHA signature of the file chunk it is requesting. If the SHA signature of the file chunk requested by the client matches the SHA signature of any file chunk currently on the server, the TCVC server application 208 will return the file chunk to the client. If the SHA signature of the file chunk requested by the client does not match the SHA signature of any file chunk currently on the server, the TCVC server application 208 will return an error.

The getclientlist transaction may be called by another TCVC server (not shown) when multiple TCVC servers are set up to serve a set of remote workstations. Multiple TCVC servers may be configured as the central server 108 to allow the load to be balanced among several servers and to allow the remote workstations to work even when one of the TCVC servers goes down. The requesting TCVC server sends as input the name of the file list it is requesting the client list for. The TCVC server application 208 sends as a response the list of IP addresses of all clients that registered with the TCVC server 202 and the time each TCVC client last contacted the TCVC server 202.

The file list 210 is considered a master file list and includes a list of files and directories that need to reside on a remote workstation and that reside in a master directory 212 on the TCVC server 202. The master directory 212 for the TCVC server 202 includes the files and directories that constitute the master file list 210. The file list name is a key for identifying the file list.

The TCVC server 202 maintains on disk the SHA signatures of file list 214 comprising the SHA signatures of the file chunks that are part of the file list 210. To determine a file chunk, the TCVC server 202 reads from the master directory 212 a file containing the file chunk size. For every file that is smaller than or equal to the file chunk size, the file chunk comprises the entire file. The TCVC server 202 generates an SHA signature for the file chunk. For every file that is larger than the file chunk size, the TCVC server logically divides each file into chunks of the specified file chunk size and generates an SHA signature for each file chunk. For example, if it is determined that the file chunk size is 1024 bytes and a file in the file list has a size of 3000 bytes, the TCVC server 202 may logically divide the file into 3 file chunks: first chunk of size 1024 starting at byte 1, a second chunk of size 1024 starting at byte 1025, and a third chunk of size 952 starting at byte 2049. The file chunk size is configurable and the size depends on an estimated wide area network bandwidth available to the central server taking into account the number of client processors coupled to the central server and their coupling bandwidth.

The TCVC server application 208 maintains on disk a list of registered client nodes 216 comprising IP addresses of the TCVC clients that contacted the TCVC server application 208 along with the last time the client contacted the server. This list is dynamically generated and is updated every time a client sends a getfilelist transaction to the TCVC server 202. The TCVC server application 208 uses list 216 during the getfilelist call to determine all the peers of the requesting client. It also returns list 216 as part of the getclientlist call. The TCVC clients maintained in this list are aged to take into account clients that are no longer active. For example, if the time period between the last time a TCVC client contacted the TCVC server application 208 and the current time is greater than a predetermined threshold, the TCVC client is considered inactive and removed from the list.

A TCVC client application, such as the TCVC client applications 220 and 240, is run on each remote workstation and configured to communicate with one or more TCVC servers, such as TCVC server 202. For example, the TCVC client application 220 obtains the list of files that are used on the remote workstations from the TCVC server 202. The TCVC client applications 220 and 240 support transactions, such as, getfilechunk, comparenotes, and queueupdate.

The TCVC client application 220, as part of its update procedure, sends a getfilechunk transaction request to another TCVC client application 240 when it wants to download a file chunk from another client. The TCVC client application 220 sends the name of the file list it is requesting and the SHA signature of the file chunk it is requesting. If the SHA signature of the file chunk requested by the client matches the SHA signature of any file chunk currently on the client, the TCVC client application 240 will return the file chunk to the requesting client. If the SHA signature of the file chunk requested by the client does not match the SHA signature of any file chunk currently on the client, the other TCVC client will return an error.

The comparenotes transaction, operating on TCVC client 220, for example, may be called by a second requesting TCVC client, such as TCVC client 240, to determine which file chunks are already present or being downloaded by a server or being transferred from another TCVC client (not shown). The requesting client 240 sends, as an input to the transaction, a list of file chunk signatures for which it wants information. The TCVC client 220 compares the list against its file chunk signatures and the files it is currently downloading from the TCVC server application 208 or one of the other TCVC clients. TheTCVC client 220 returns to the requesting TCVC client 240 those file chunk signatures from the list which are already present on disk and those that are being currently downloaded from the TCVC server application 208 or another client. For each file chunk being downloaded, the TCVC client 220 returns to the requesting TCVC client 240 the estimated time that the download will take to complete (ETA) and a server bit indicating with a setting of "1" that the file chunk is being downloaded from the TCVC server application 208 and with a setting of "0" that the file chunk is being transferred from another client. For each file chunk already on disk, the TCVC client 220 returns a combination of an ETA of "0" and a server bit setting of "0".

The QueueUpdate transaction, operating on TCVC client 220, for example, is called in response to a workstation user status request to show the current status of a workstation TCVC client update. No input is required for this transaction and it returns as output an HTML page showing the current state of the TCVC client, such as, idle, contacting server, downloading from another client, downloading from server, sleeping, running a post download update or the like.

The workstation 204 maintains a file list 222, a staging directory (SDIR) 224, a pristine directory (PDIR) 226, a live directory (LDIR) 230, update programs 232, file chunk size, and server address or addresses. The file list 222 stores the files and directories that reside in the PDIR 226. Within the file list 222 is a configuration file for the TCVC client containing among other files and directories, a name of the file list. The file list 222 corresponds to the file list 210 that resides on the TCVC server 202.

The pristine directory (PDIR) 226 holds all the files and directories that constitute the file list, for example, corresponding to the file list 210 on the TCVC server 202. The TCVC client 220 generates SHA signatures for the file chunks of the files in the PDIR 226 and compares this list of SHA signatures with the list returned by the TCVC server application 208 on a getfilelist call to determine which file chunks need to be downloaded. The file chunks in the PDIR 226 are also used to create the initial version of the staging directory (SDIR) 224 where the files from the server and/or other clients are downloaded. The files are not downloaded directly into the PDIR 226 to ensure that the PDIR 226 holds a known version of the file list. The file list may be deleted or updated from the staging directory 224 when all file chunks have been downloaded to the staging directory 224.

The staging directory (SDIR) 224 holds all the files and directories that are downloaded from the TCVC server application 208 and/or other TCVC clients, such as TCVC client 240. The SDIR 224 is initially created using the file chunks in the PDIR 226 whose signatures match the file chunk signatures returned by the TCVC server application 208 during a getfilelist call. Any other files that are downloaded by the TCVC client 220 are saved in the staging directory 224. Once all file chunks that need to be downloaded have been downloaded to the SDIR 224, the pristine directory (PDIR) 226 is deleted and the contents of the SDIR 224 are moved to become the new PDIR 226.

The TCVC client 220 maintains on disk the SHA signatures of file chunks 228 in the PDIR 226. The file chunks are determined in a similar manner as used in the TCVC server 202. These signatures are compared against the signatures returned by the TCVC server application 208 during a GetFileList call to determine which files need to be downloaded.

A live directory (LDIR) 230 is the location on the workstation disk that holds all the files and directories for the workstation 204. Many programs that need to run on the workstation 204 are started from the live directory 230. Once all the files have been downloaded by the TCVC client 220, any programs running from the live directory 230 are stopped and updated.

An update programs file 232 includes programs that are run during an update process once all expected files have been downloaded. These update programs are part of the file list which allows for them to be updated just like other files. The update programs are run out of the pristine directory 226.

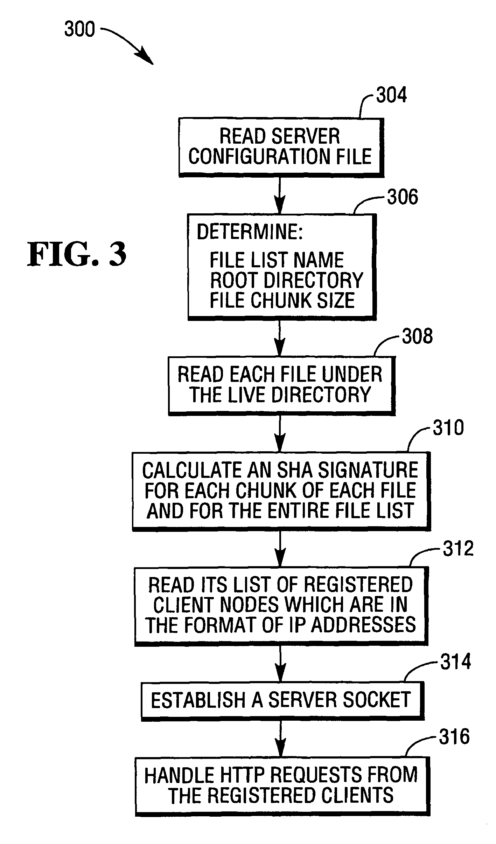

Fig. 3 illustrates a thin client version control (TCVC) server startup process 300 in accordance with an aspect of the present invention. Functional elements from Fig. 2 are referred to in corresponding steps in the following figures. Beginning in step 304, the TCVC server application 208 reads its configuration file. In step 306, the TCVC server application 208 determines the file list name, a live directory, and file chunk size based on information obtained from the configuration file. The file list 210 includes all files and subdirectories under the live directory. The file chunk size is configurable and based on an average file size and an allocated wide area network bandwidth. In step 308, the TCVC server application 208 reads each file under the live directory. In step 310, the TCVC server application 208 calculates a secure hash algorithm (SHA) signature meeting the secure hash standard federal information processing standard (FIPS) publication 180-1, which is incorporated by reference herein in its entirety. An SHA signature is also determined for the entire file list. In step 312, the TCVC server application 208 reads its list of registered client nodes 216 stored in the format of Internet protocol (IP) addresses. In step 314, the TCVC server application 208 establishes a server socket at its end of a communication channel between a client, such as workstation 204, and the TCVC server application 208. In step 316, the TCVC server application 208 handles hypertext transfer protocol (HTTP) requests from the registered clients.

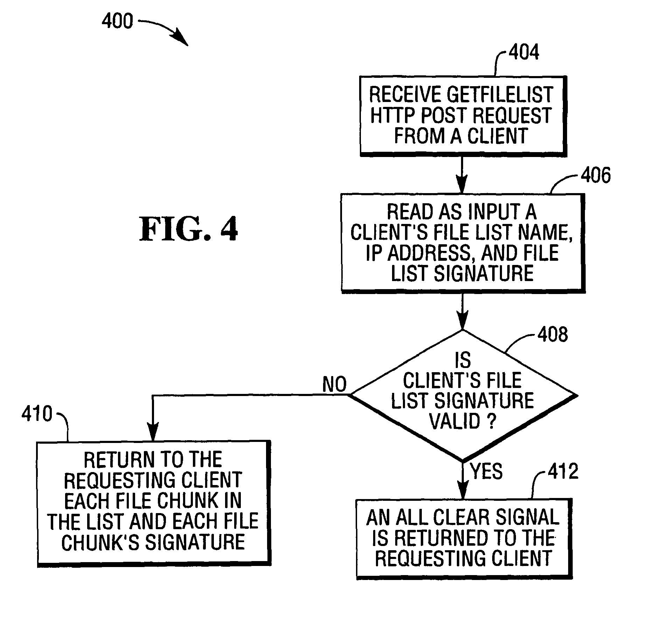

Fig. 4 illustrates a first response server process 400 for responding to a first client request in accordance with an aspect of the present invention. In step 404, a getfilelist hyper text transfer protocol (HTTP) post request is received in the TCVC server application 208 from a registered client, such as workstation 204. In step 406, a client's file list name, IP address, and file list signature is read in from the received request. In step 408, it is determined whether the client's file list signature is valid. In step 410, if the client's file list signature is determined to not be valid, each file chunk in the list and each file chunk's signature is returned to the requesting client. This determination is not considered an error because it indicates that the client does not have the latest file list and needs to download the latest level of files. If the client's list signature is determined to be valid, an all clear signal is returned to the requesting client in step 412.

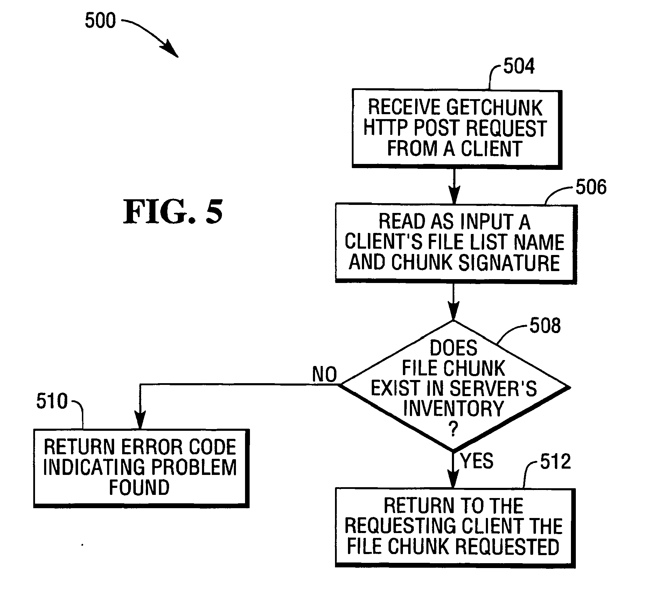

Fig. 5 illustrates a second response server process 500 for responding to a second client request in accordance with an aspect of the present invention. In step 504, a getchunk HTTP post request is received from a registered client, such as workstation 204. In step 506, a client's file list name and chunk signature are read from the received request. In step 508, it is determined whether the requested file chunk exists in the TCVC server's inventory. In step 510, if the requested file chunk is not found in the TCVC server's inventory, an error code is reported indicating the problem found. In step 512, the requested file chunk is returned to the requesting client.

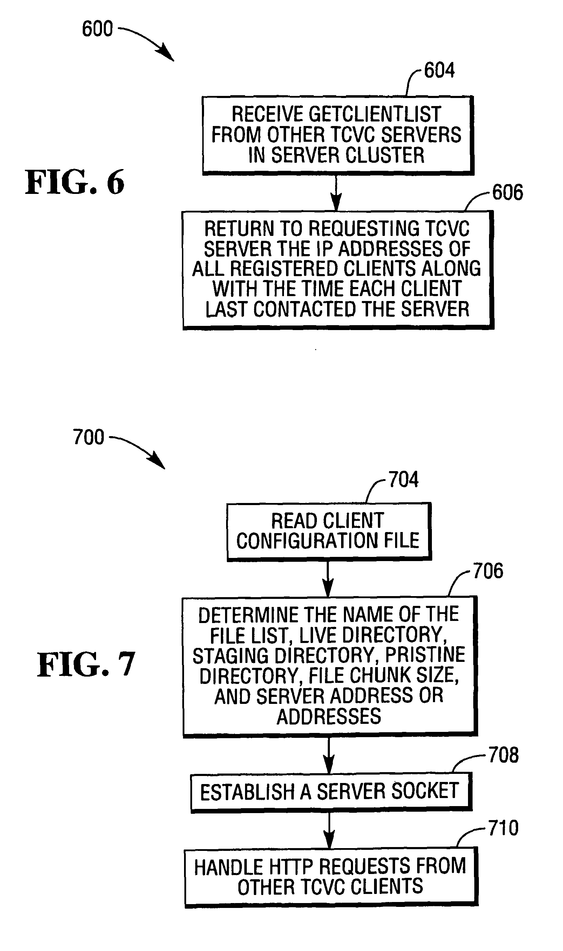

Fig. 6 illustrates a third response server process 600 for responding to a first server request in accordance with an aspect of the present invention. In step 604, a getclientlist request is received from another one of the TCVC servers in a server cluster. In step 606, the IP addresses of all registered clients along with the time each client last contacted the server is returned to the requesting TCVC server. This information is used to allow a group of TCVC servers to all maintain the same list in a load balancing and fault tolerant setup.

Fig. 7 illustrates a TCVC client startup process 700 in accordance with an aspect of the present invention. In step 704, the TCVC client 220 reads in a configuration file. In step 706, the name of the file list, live directory, staging directory, pristine directory (PD), file chunk size, and server address or addresses are determined from the data read in the configuration file. In step 708, the TCVC client 220 establishes a server socket at its end of a communication channel between the TCVC client 220 and the TCVC server 202. In step 710, the TCVC client 220 handles HTTP requests from other TCVC clients.

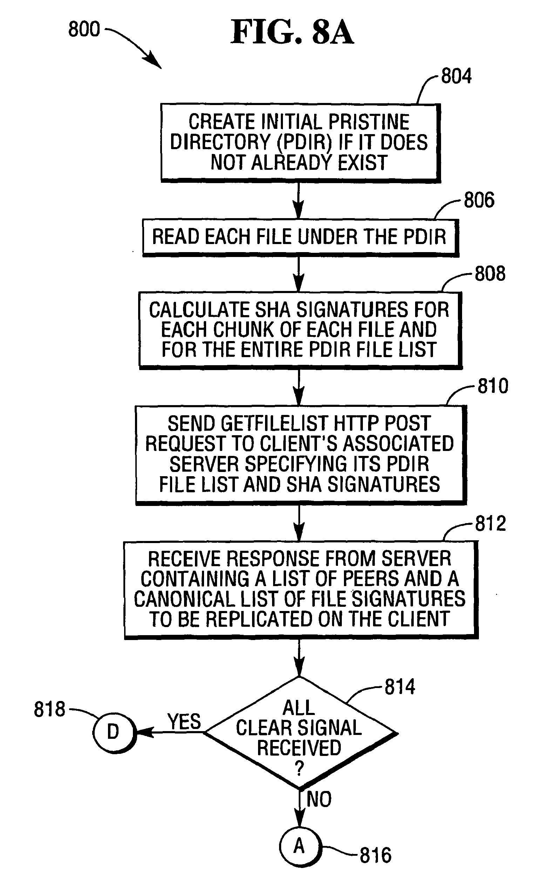

Fig. 8A illustrates part A of a TCVC client update process 800 in accordance with an aspect of the present invention. In step 804, an initial pristine directory (PDIR) 226 is created if it does not already exist. In step 806, each file in the PDIR 226 is read. In step 808, an SHA signature is calculated for each chunk of each file and for the entire PDIR file list. In step 810, a getfilelist HTTP Post request is sent to the client's associated TCVC server, such as TCVC server 202, specifying its PDIR file list and SHA signatures. In step 812, a response is received from the TCVC server 202 containing a list of peers and a canonical list of file signatures to be replicated on the client. The "canonical list" is the list of all file chunks currently on the server, their location on disk relative to a live directory, and their SHA signatures. In step 814, it is determined whether an all clear signal has been received. The all clear signal indicates that the client has the same files as the server and no further action is necessary. If the all clear signal has not been received, the process proceeds to step A 816. If the all clear signal has been received, the process 800 proceeds to step D 818.

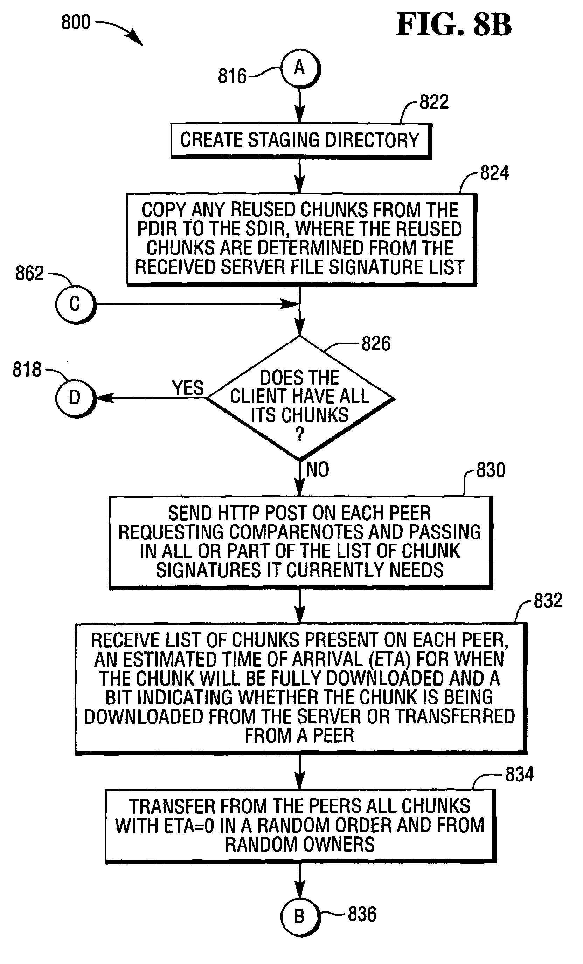

Fig. 8B illustrates part B of the TCVC client update process 800 in accordance with an aspect of the present invention. Part B of process 800 continues from part A step 816. In step 822, a staging directory is created, such as staging directory (SDIR) 224. In step 824, any reused chunks are copied from the PDIR 226 to the SDIR 224. The reused chunks are determined from the received server file signature list. In step 826, it is determined whether the client has all its chunks. If it is determined that the client has all of its chunks, the process 800 proceeds to part D step 818. If it is determined that the client doe not have all its chunks, the process proceeds to step 830. In step 830, an HTTP post is sent to each peer requesting a comparenotes transaction and passing in a list of chunk signatures it currently needs. In step 832, a list of file chunks present on each peer is received in the requesting client. Along with that list there is an estimated time of arrival (ETA) for when the file chunk will be fully downloaded and a bit indicating whether the chunk is being downloaded from the TCVC server or transferred from another TCVC client. In step 834, all chunks with an ETA of zero are downloaded to the requesting client, for example, in a random order and from random peer owners. A peer and the file chunk to transfer from the peer are preferably chosen at random or a pseudorandom basis to reduce the likelihood that a single peer will be overloaded with requests from other peers. The process 800 then proceeds to part B step 836.

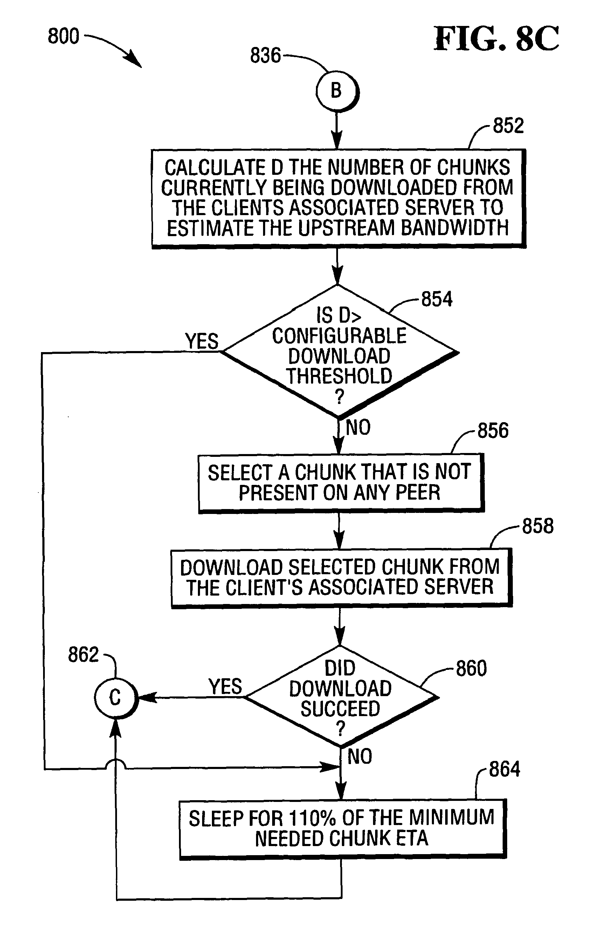

Fig. 8C illustrates part C of the TCVC client update process 800 in accordance with an aspect of the present invention. Part C of process 800 proceeds from part B step 836. In step 852, a variable D is calculated to represent the number of chunks currently being downloaded from the client's associated server, such as TCVC server 202. Every TCVC client has in its configuration file a specified TCVC server to connect to for access to files. The variable D is used to estimate the upstream bandwidth. The variable D is calculated if all chunks with ETA = 0 have been downloaded from all peers, indicating that there are no more files to download from the peers and the next file will need to be downloaded from the TCVC server. In step 854, it is determined whether D is greater than a configurable download threshold. The download threshold is specified in the configuration file, contained in file list 222, that is read at startup. The download threshold is calculated based on network bandwidth from the client to the server. If D was determined to be greater than the configurable download threshold, the process 800 proceeds to step 864. If D was determined to be less than or equal to the configurable download threshold, then the process proceeds to step 856.

In step 856, a chunk that is not present or not being downloaded on any peer is selected. In step 858, the selected chunk is downloaded from the client's associated server upon request from the client. This process is followed by each client to prevent the same file chunk from being downloaded twice from a TCVC server. In step 860, it is determined whether the download succeeded. If the download succeeded, the process 800 proceeds to step 862 which returns to Part B step 826 of Fig. 8B. Once the download is successfully completed, the TCVC clients go back to step 826 where they once again call comparenotes on each peer. This step will let these clients know which new file chunks have been downloaded by other peers while it was downloading a file from the server. If the download did not succeed, the process proceeds to step 864.

In step 864, the requesting client is placed into a sleep mode for 110% of the minimum needed chunk ETA. The client is placed in sleep mode since it cannot perform any other action until the file chunks have been downloaded. The value of 110% of ETA is calculated to allow a peer to finish any additional processing, such as calculation of an SHA signature, after the download is complete.

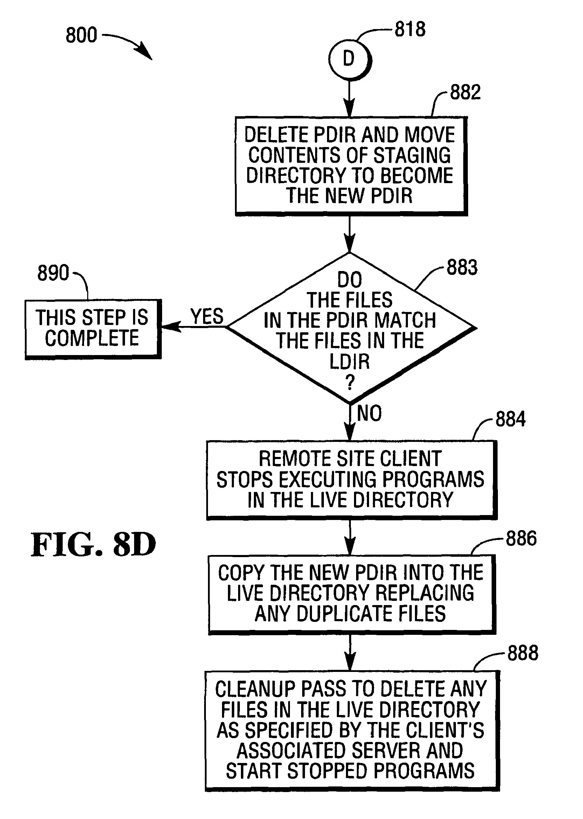

Fig. 8D illustrates part D of the TCVC client update process 800 in accordance with an aspect of the present invention. Part D of process 800 proceeds from part A step 818 and begins with step 882. In step 882, the pristine directory (PDIR) 226 is deleted and the contents of the staging directory (SDIR) 224 are moved to become the new PDIR 226. The staging directory 224 is first created in step 822. It is updated with chunks from the PDIR 226 in step 824 and from any files downloaded in steps 834 and 858 which are saved in the staging directory. In decision step 883, the files in the pristine directory (PDIR) are compared against the files in the live directory (LDIR). If the files in the PDIR do not match the files in the LDIR, the process 800 proceeds to step 884. In step 884, the remote site client stops executing programs in the live directory. The live directory was introduced in Fig. 7 step 706. It is the directory from which the programs are actually run. A program in the live directory may be stopped from executing since the program may need to be updated with a newer version from the PDIR.

In step 886, the new PDIR is copied into the live directory replacing any duplicate files. In step 888, a cleanup pass is done to delete any files in the live directory as specified by the client's associated server. Stopped programs are restarted as part of step 888. The server sends the list of files to be deleted as part of the initial request in step 812. These files can be deleted because they are no longer used. Note that once the cleanup pass is complete, any programs that were stopped in step 884 are restarted.

Returning to decision step 883, where the files in the pristine directory (PDIR) are compared against the files in the live directory (LDIR), a match decision may be reached. If the files in the PDIR match the files in the LDIR, the process 800 proceeds to step 890 which indicates this step in the process 800 is complete.

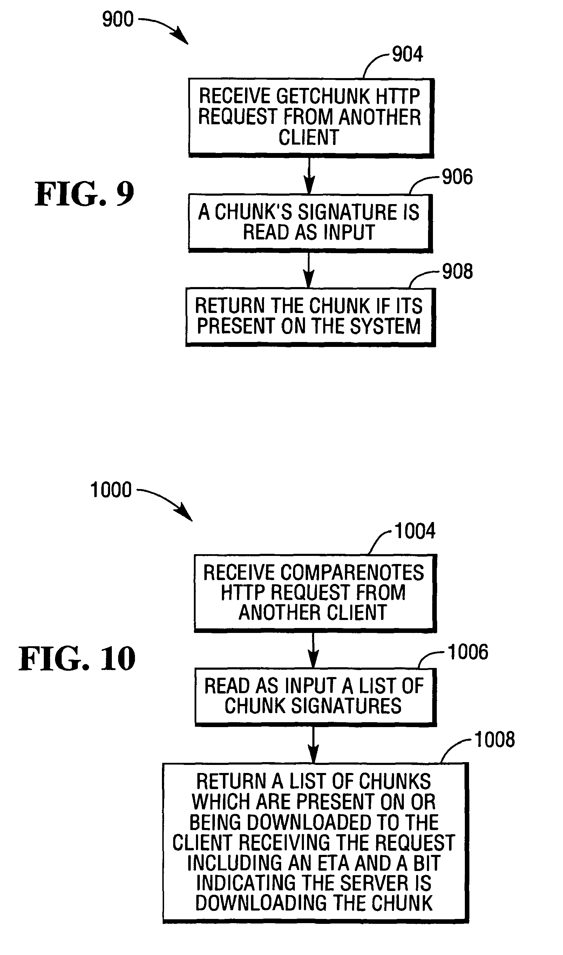

Fig. 9 illustrates a first response client process 900 for responding to a first request from another client in accordance with an aspect of the present invention. In step 904, a getchunk HTTP request is received from another client. In step 906, the chunk's signature is read from the received request. In step 908, the requested chunk is returned if it is present on the client receiving the request.

Fig. 10 illustrates a second response client process 1000 for responding to a second request from another client in accordance with an aspect of the present invention. In step 1004, a comparenotes HTTP request is receive from another client. In step 1006, a list of file chunk signatures is read from the received request. In step 1008, a list of file chunks which are present on or being downloaded to the client receiving the request is returned to the requesting client along with an ETA and a bit indicating the server is downloading the chunk.

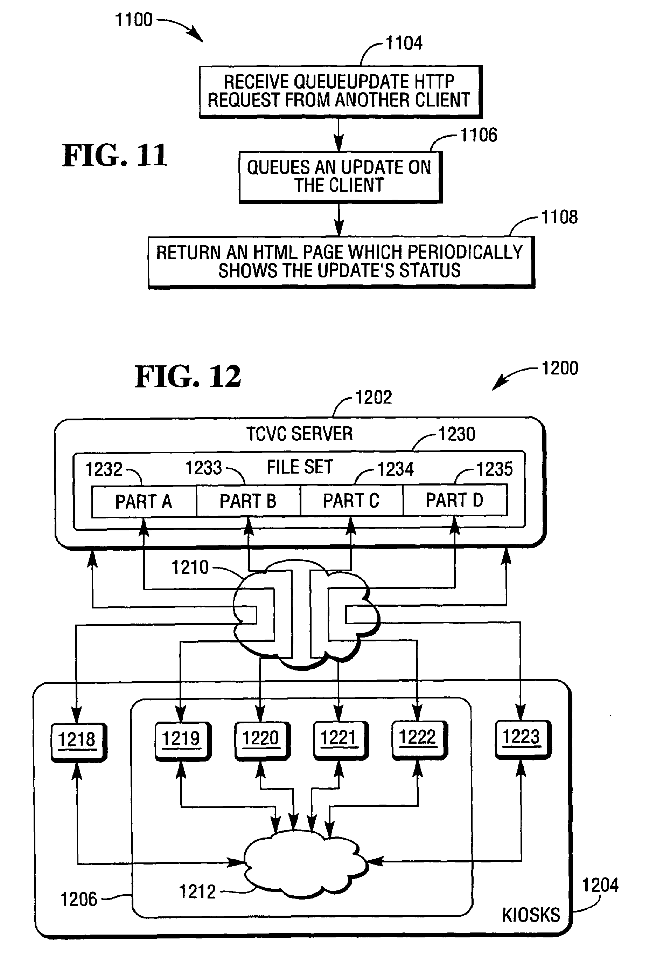

Fig. 11 illustrates a third response client process 1100 for responding to a third request from another client in accordance with an aspect of the present invention. In step 1104, a queueupdate HTTP request is received from another client. In step 1106, an update is queued on the client. In step 1108, a hypertext markup language (HTML) page is returned which shows an update's status.

Fig. 12 illustrates an exemplary automated software distribution system 1200 in accordance with an aspect of the present invention. The exemplary software distribution system 1200 comprises a TCVC server 1202, a first set of kiosks 1204, a second set of kiosks 1206, the second set of kiosks 1206 being a subset of the first set of kiosks 1204, a first coupling network 1210, and a second coupling network 1212. The TCVC server 1202 functions in a similar manner as the TCVC server 202 of Fig. 2. Each of the kiosks in the first set of kiosks 1204 possesses a coupling path through the first coupling network 1210 to the TCVC server 1202. The first set of kiosks 1204 consist of kiosks 1218-1223 which are coupled together over the second coupling network 1212. Each kiosk 1218-1223 functions in a similar manner to the workstation 204 of Fig. 2. The first coupling network 1210 may be a wide area network, such as, a frame relay network, a virtual private network (VPN), the Internet, or the like. The second coupling network 1212 may be a local area network operating at a remote site to provide local high speed connections between the local kiosks 1218-1223.

A file set 1230 is partitioned into four parts 1232-1235. In accordance with the process described in Figs. 3-11, the file set 1230 is distributed to each of the kiosks 1219-1222 of the second set of kiosks 1206. The distribution is accomplished, for example, by request of the client kiosk downloading part A 1232 to kiosk 1219, downloading part B 1233 to kiosk 1220, downloading part C 1234 to kiosk 1221, and downloading part D 1235 to kiosk 1222 with each downloading accomplished over the first coupling network 1206. Each of the kiosks 1218-1223 transfers the appropriate missing files between themselves until each kiosk 1218-1223 has a replica of the file set 1230. For example, kiosk 1223 receives part A 1232 from kiosk 1219, part B 1233 from kiosk 1220, part C 1234 from kiosk 1221, and part D 1235 from kiosk 1222. The file chunks, part A 1232, part B 1233, part C 1234, and part D 1235 may be transferred from the second set of client processors 1206 when they are available for transfer without waiting for the complete set of files 1232-1235 to be downloaded from the software distribution processor.

If a server has N clients and hosts a file list size of M, of which, 50% is new or changed data and M/2 data is sent to each client, then the average amount of data transferred is (M*N)/2. The percentage of data from a file set which may be new or changed data may vary. In the following discussion, M is assumed to be the net amount of data to be sent to each client. In a typical scenario with N=1000 clients and a file list to be sent to each client of M=100MByte (100MB), the amount of data transferred would be (100MB*1000) = 100,000MB or 100GB which is large considering a wide area network may vary from client to client with a range from 56 kilobits per second (kbps) to 1.5Mbps or higher. Using the TCVC approach of the present invention and assuming the clients are subdivided into K local networks, the wide area network (WAN) data transfer approaches (M*K) where K is strictly less than N. In practice, K is relatively small compared to N allowing a significant savings in bandwidth. If K=50 local networks are used to support 1000 clients, for the present example, with a distribution of 20 clients per each local network, then the amount of data transferred over the WAN is (100MB*50)=5,000MB or 5GB, a much more manageable number. By distributing the 5GB over the 50 local networks, any given server to client local network approaches the minimum of M or 100MB, in the example. The 100MB in each local network is partitioned into file chunks and distributed to all or a subset of the 20 clients. The 20 clients in each local network may then exchange missing file chunks in accordance with the present invention until the 100MB file list is obtained on each of the clients. The technique minimizes communication with the server, where the savings are due to requiring less communications of redundant data on the main server connection.

The methods described in connection with the embodiments disclosed herein may be embodied directly in hardware, in software executed by a processor, or in a combination of the two. Software or program code may reside in random access memory (RAM), flash memory, read only memory (ROM), electrically programmable read only memory (EPROM), electrically erasable programmable read only memory (EEPROM), a hard disk, a removable disk, a compact disk read only memory (CDROM), or any other form of storage medium known in the art. A storage medium may be coupled to the processor such that the processor can read information from, and may write information to the storage medium.

While the present invention has been disclosed in a presently preferred context, it will be recognized that the present teachings may be adapted to a variety of contexts consistent with this disclosure and the claims that follow. It will appreciated that the present invention may be employed with Internet connected home local networks as well as business systems having an internal intra-network coupled to department local networks, or a wide variety of other self-service kiosk supported applications as the use of such kiosks matures and evolves. It will also be appreciated that variations in the particular hardware and control process employed are feasible, and to be expected as both evolve with time.

## Claims

1. An automated method for pulling software to update a client processor, the automated method comprising: integrating the client processor with at least one other client processor coupled together over a local area network; integrating the client processors with a software distribution processor coupled together over a wide area network, wherein the software distribution processor holds a software distribution as a set of file chunks, each file chunk of a configurable size and each file chunk with a calculated digital signature; communicating with the software distribution processor by request of the client processor to obtain a list of client processors coupled together over the local area network and a desired state of software for the client processor; determining in the client processor that at least one file chunk of the software distribution is required based on a comparison of the desired state with a current state of software running on the client processor; and transferring, by request of the client processor, the at least one file chunk from another client processor to the client processor over the local area network.

2. A method as claimed in claim 1 further comprises: determining in the client processor that the at least one file chunk is not available from one of the other client processors or is not being downloaded by one of the other client processors; and downloading the at least one file chunk from the software distribution processor.

3. A method as claimed in claim 1 or claim 2 further comprises: determining the configurable size of each file chunk based on an estimated wide area network bandwidth available to the software distribution processor taking into account the number of client processors coupled to the software distribution processor and their coupling bandwidth.

4. A method as claimed in any preceding claim further comprises:
processing in the software distribution processor a getfilelist transaction received from a client processor to determine if the client processor requires a software update based on a comparison of a digital signature of a file list of file chunks in the client processor with a digital signature of a master file list of file chunks located on the software distribution processor, wherein the master file list represents the desired state.

5. A method as claimed in claim 4 further comprises: determining the comparison indicates the client processor requires a software update; and communicating the digital signature of the master file list, the list of each file chunk in the master file list, the associated signature of each file chunk, and the list of coupling addresses for peer clients.

6. A method as claimed in any preceding claim further comprises: processing in the software distribution processor a getfilechunk transaction received from the client processor to download a file chunk identified by its digital signature.

7. A method as claimed in any preceding claim further comprising:
processing in the software distribution processor a getclientlist transaction received from another software distribution processor for the purpose of balancing the workload among at least two software distribution processors.

8. A method as claimed in any preceding claim wherein the client processor comprises: a pristine directory holding file chunks and a file list of the file chunks, wherein the pristine directory holds the current state of software running on the client processor; and a digital signature of the file list and digital signatures for each file chunk.

9. A method as claimed in any preceding claim further comprises: processing in the client processor a getfilechunk transaction received from another client processor to transfer a file chunk identified by its signature.

10. A client workstation for pulling software updates, the client workstation comprising: a local area network coupling the client workstation to at least one other client workstation for use in integrating the client workstation with the at least one other client workstation; a wide area network coupling the client workstations to a software distribution server for use in synchronizing the client workstations with the software distribution server, the software distribution processor holding a software distribution as a set of file chunks, each file chunk of configurable size and each file chunk with a calculated digital signature; a client application operating on the client workstation to communicate with the software distribution processor by request of the client workstation to obtain a list of client workstations coupled together over the local area network and a desired state of software for the client workstation, to determine in the client workstation that at least one file chunk of the software distribution is required based on a comparison of the desired state with a current state of software running on the client workstation, and to transfer, by request of the client workstation, the at least one file chunk from another client workstation to the client workstation over the local area network.
